# EUROPEAN PATENT SPECIFICATION

(11) **EP 1 308 644 B1**
(45) Date of publication and mention of the grant of the patent: **02.03.2005**
(21) Application number: 02022255.0
(22) Date of filing: 04.10.2002
(51) Int. Cl.: F16D 59/00, B60T 1/06, B60K 17/28, B60K 25/06, F16H 1/14

(54) **Automatically operated braking device for transmission means, in particular for an agricultural tractor**
Automatische Bremsvorrichtung für ein Getriebe, insbesondere für einen Traktor
Frein automatique pour une transmission, en particulier pour un tracteur

(30) Priority: 31.10.2001 IT BO20010660
(43) Date of publication of application: 07.05.2003
(73) Proprietor: GB S.r.l., 40069 Zola Perdosa (Bologna) (IT)
(72) Inventor: Calza, Ivo, 45036 Ficarolo (Rovigo) (IT)
(74) Representative: Dall'Olio, Giancarlo

(56) References cited:
- EP-A- 0 800 261
- US-A- 2 086 807
- US-A- 4 176 733
- US-A- 5 142 940

## Description

The present invention relates to agricultural machines and apparatuses, such as tractors with one or more axles which operate working means, such as rotating means, cutting means, and so on.

More precisely, the present invention relates to an automatically operated braking device for motion transmission means, in particular for transmission means operated by tractors with one or more axles.

Recent regulations issued by the European Community directed to increase the safety and increase measures against incidents occurring to drivers of agricultural machines, e.g. tractors with one or more axles, have introduced important requirements, especially concerning operating working means of rotating or cutting type, operated by the same tractors.

In fact, according to the above regulations, any working means e.g. rotating means or cutting means, controlled by motion transmission means operated by the tractors, either with one or with more than one axles, must absolutely stop within seven seconds after the engine of the tractor have been disconnected or deactivated.

Currently, agricultural machines, such as tractors with one or more axles drive the working means by motion transmission means including generally an input shaft (driving shaft), driven into rotation by an engine of the tractor and aimed at operating at least. one output shaft (driven shaft), which operate the above mentioned working means (e.g. blades or mower bars, cutters or other types of working means used in agriculture).

Currently, the driving shaft is coupled with the driven shaft simply by meshing means, including usually a pair of toothed wheels, e.g. of conical type: a first toothed wheel connected to the driving wheel and a second toothed wheel connected to one end of the driven shaft.

After the engine operating the driving shaft has been disconnected or deactivated, the working means stop is delayed due to the inertia of the system formed by the whole driving shaft-meshing means-driven shaft-working means. This is due to the fact that stopping of the motion transmission means and of the related working means, connected to the tractors with one or more axles is not subjected to any braking action.

Consequently, the tractors with one or more axles known in prior art disadvantageously cannot ensure stopping of the working means within the time limits imposed by the above mentioned European regulation, and moreover, they cannot ensure sufficient safety margins for the drivers who operate these types of machines.

Document EP-A-0.800.261 describes a braking system for an electric motor comprising a plated-shaped driver which drives a brake disc by means of the motor. The brake disc in turn drives a unit, such as a cutting unit of a rotary lawn mower. Between the driver and the brake disc there is some play, thanks to which ramp surfaces, that are pressed together by a helical spring, can move the brake disc away from the motor out of engagement with a number of brake blocks.

US-A-2,086,807 describes a motion transmission means for a tractor according to the preamble of claim 1.

Object of the present invention is to propose motion transmission means, in particular transmission means operated by agricultural tractors with one or more axles, which avoid the above described disadvantages of prior art.

More precisely, the specific object of the present invention is to propose motion transmission means with an automatically operated braking device connected to transmission means operated by tractors with one or more axles, which ensures stopping of the rotation of these motion transmission means when the engine is disconnected or deactivated.

Another object of the present invention is to propose motion transmission means with an automatically operated braking device which acts directly on the transmission means operated by tractors with one or more axles, in particular on the rotation speed of the main control shaft and consequently, of the driven shaft, so as to stop it, when the tractor engine is disconnected or deactivated, within the time limits imposed by the European regulations concerning safety.

A further object of the present invention is to propose a braking device, which can be activated automatically without any outer intervention, in step relation with the disconnection or deactivation of the engine.

The above mentioned objects are achieved by the features of the independent claim, while preferred embodiments are defined in the dependent claims

The invention will now be described in more detail with reference to particular, non-limiting embodiments and with reference to the accompanying drawings, in which
- Figure 1 is a schematic plan, partially cutaway, view of the braking device proposed by the present invention, shown in a configuration corresponding to the coupling between the driving shaft and the driven shaft;
- Figure 2 is a schematic plan, partially cutaway, view of the braking device proposed by the present invention, shown in a configuration corresponding to a braking step of the driving shaft and the driven shaft;
- Figure 3 is a schematic and section view, taken along III-III of Figure 1, of a particularly significant element of the proposed braking device.

With reference to the enclosed drawings, the reference letter F indicates the automatically operated braking device for transmission means, in particular for motion transmission means A1, A2 operated by agricultural tractors with one or more axles, proposed by the present invention.

The above mentioned transmission means A1, A2 include a driving shaft A1, operated by the motor means, i.e. the engine, of the tractor with one or more axles (not shown in the enclosed drawings), at least one driven shaft A2 (likewise not shown in the enclosed drawings) for operating the working means thereby powered and meshing means R1, R2 which couple a first end of the driving shaft A1 with a first end of the driven shaft A2 and transmit the motion therebetween.

The meshing means R1, R2 include a first toothed wheel R1, mounted on the driving shaft A1, and a second toothed wheel R2, mounted on the driven shaft A2, mutually and reciprocally engaged one with the other.

The toothed wheels, first R1 and second R2, can be e.g. conical (as shown in the enclosed drawings).

The proposed braking device F includes mechanical working means 10 which are coupled, sliding axially, with the driving shaft A1 in the region corresponding to its first end of the latter, and are equipped, on one side, with first means 11, for coupling and connection with the meshing means R1, R2, and on the other side, with second means 12 for abutment against braking means 13.

The braking means 13 are connected to the driving shaft A1.

As in the example shown in the enclosed drawings, the mechanical means 10 can include a sleeve 100, sliding axially with respect to the driving shaft A1 and situated between the meshing means R1, R2 and the braking means 13.

The sleeve 100 is equipped, in the region of its end facing the meshing means R1, R2, with the above first mutual coupling means 11, and in the region of its end facing the braking means 13, with said second abutment means 12.

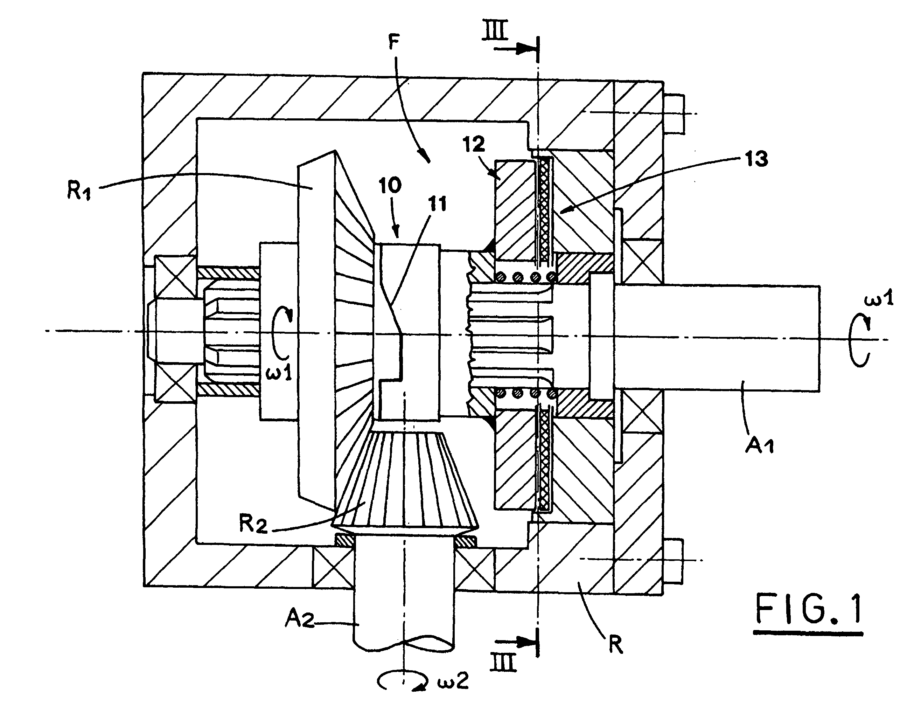

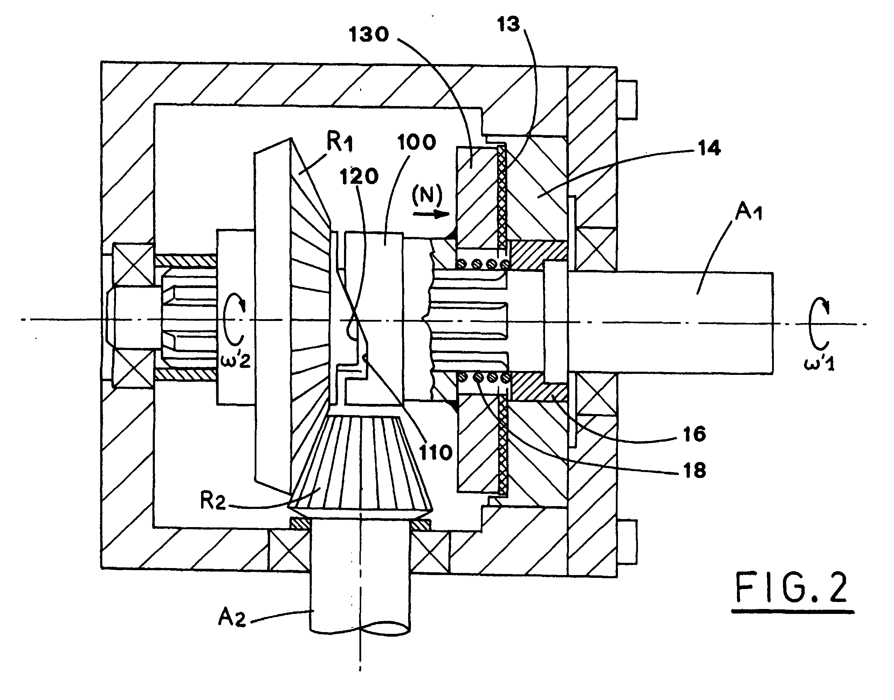

As it can be seen from the embodiment shown in Figures 1 and 2 as a non limitative example, the first mutual coupling means 11 include recesses 110, arranged circumferentially on the end of the sleeve 100 turned toward the meshing means R1, R2.

The recesses 110 are suitably shaped in axial direction and are aimed at being clutch-coupled with corresponding protrusions 120, whose shape is complementary to the shape of the recesses 110 and which are arranged circumferentially and protruding axially from a surface of the meshing means R1, R2 facing the sleeve 100.

The shape of the above recesses 110 and the protrusions 120 is such as to endure their mutual coupling, when both the driving shaft A1 and the first toothed wheel R1 rotate with the same angular speed ω1, imposed to the driving shaft A1 by the motor means (see Figure 1), but allows their partial disengagement, by reciprocal angular shift, when the driving shaft A1 rotates with an angular speed ω1' lower and decreasing with respect to the angular speed ω2' of the first toothed wheel R1 (see Figure 2), due to disconnection or deactivation of the motor means.

The second abutment means 12, as shown in the same Figures 1 and 2 as a non limitative example, can include a flange 130, made in the sleeve 100, integral therewith.

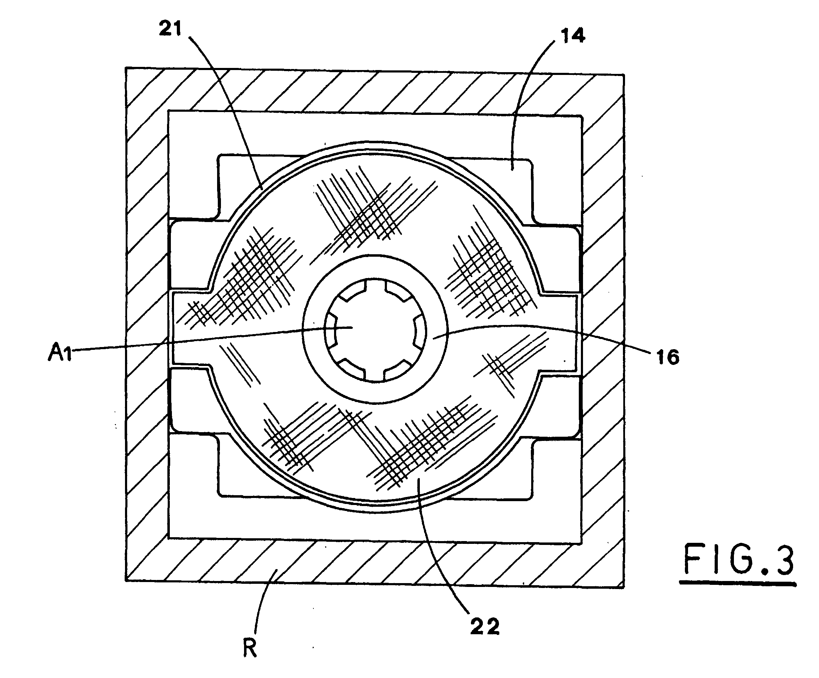

The above braking means 13 include, as in the example shown in Figure 3, a stationary plate 14, which is kept concentric with respect to the driving shaft A1 by a brass bushing 16.

The stationary plate 14 has a seat 21 made in its surface turned toward the sleeve 100, and the shape of the seat is substantially circular and aimed at receiving a corresponding lining of asbestos material 22 having shape complementary to the seat.

In order to ensure a suitable positioning of the lining 22 on the plate 14 and to avoid undesired rotation thereof with respect to the plate 14, the latter includes a plurality of seats made along its transversal symmetry axis, which are aimed at receiving corresponding winglets made on the lining 22.

The assembly formed by the braking device F, in particular by the related braking means 13, the related sleeve 100 and the related meshing means R1, R2, can be introduced into a gear support housing R. One end of the driving shaft A1 is introduced on one side of the housing, and an end of the driven shaft A2 is introduced in another side of the housing..

According to the enclosed figures, the driving shaft A1 and the driven shaft A2 are incident, however it is evident that the application of the proposed braking device F is not limited to this type of coupling, but it can be also applied when the driving shaft and the driven shaft are inclined with respect to each other.

Now, operation of the braking device F proposed by the present invention will be shortly described.

When the driving shaft A1 is rotated in ω1 by the motor means of the tractor with one or more axles, the above mentioned mechanical working means 10 of the braking device F define the mutual coupling and connection between the driving shaft A1 and the meshing means R1, R2 by the first means 11. In this way, the driven shaft A2 is also rotated in ω2 and the working means controlled thereby are driven. At the same time, the above mentioned mechanical working means 10 ensure the disengagement of the second abutment means 12 from the braking means 13 (Figure 1).

When the motor means of the tractor with one or more axles are disconnected or deactivated, then the same mechanical working means 10 of the braking device F disengage, partially and temporarily, the first mutual coupling means 11 from the meshing means R1, R2 due to slowing down of the driving shaft A1 with respect to the same meshing means R1, R2, which continue their rotation with higher speed due to their inertia. While doing so, the mechanical working means 10 move axially in direction N toward the braking means 13, so as to cause a friction between the latter and the second means 12 for abutment: this causes the braking and stopping of the driving shaft A1 and consequently, of the meshing means R1, R2 as well as of the driven shaft A2 and of the working cutting means (Figure 2).

More precisely, when the driving shaft is rotated in ω1, the recesses 110 of the sleeve mate with the protrusions 120: this allows to define a mutual coupling and connection, in the rotation ω1 direction, between the driving shaft A1 and the meshing means R1, R2, so as to operate the driven shaft A2 into rotation ω2.

Whereas, when the motor means are disconnected or deactivated and, consequently, the driving shaft A1 slows down, since it tends to rotate with a decreasing angular speed ω1', lower with respect to the angular speed ω2' of the meshing means R1, R2, the recesses 110, due to a reciprocal angular shifting with respect to the protrusions 120 determined by different rotation speeds, respectively ω1' for the recesses 110 and ω2' for the protrusions 120, disengage partially from the protrusions 120, causing a movement in axial direction.

This partial disengagement causes the axial sliding N of the sleeve 100, with respect to the driving shaft A1 toward the braking means 13 until the flange 130 and the lining 22 are mutually engaged by friction, so as to brake and stop the driving shaft driving shaft A1, the sleeve 100 the meshing means R1, R2, and consequently also the driven shaft A2 and the cutting working means.

The entity of the axial sliding N of the sleeve 100 toward the braking means 13 does not allow the total and complete disengagement of the recesses 110 from the relative protrusions 120: this advantageously allows to control, with only one braking action, the stopping of both the driving shaft A1 and the first toothed wheel R1, which is still connected to the shaft, although leaving a small clearance therebetween, due to the still existing partial coupling between the sleeve 100 and the first toothed wheel R1 by the corresponding recesses 110 and the protrusions 120.

Consequently, the same braking action allows to stop also the second toothed wheel R2, the driven shaft A2 and the working means connected with the latter.

Bringing the sleeve 100 back to its initial position, in which the recesses 110 and the corresponding protrusions 120 of the first toothed wheel R1 are mutually and completely coupled, is advantageously ensured by the presence of elastic return means 18, connected to the sleeve 100, which elastic return means are stressed and loaded due to the above mentioned axial sliding N, so that they bring the sleeve 100 back to the complete coupling with the meshing means R1, R2 after the transmission means A1, A2 have been stopped.

It becomes evident from the above description how the braking device proposed by the present invention allows, in an extremely efficient and automatic way, without any outer intervention, to brake and stop the motion transmission means, in particular the transmission means operated by agricultural tractors with one or more axles, due to the disconnection or deactivation of the motor means of the latter.

Therefore, the proposed device is able to brake and stop the working means connected with the motion transmission means operated by tractors with one or more axles in an extremely short time, and anyway within time limits imposed by recent European regulations concerning safety.

Moreover, the braking device can ensure, during the operating of the driving shaft, an efficient mutual coupling between the latter and the meshing means, so as to obtain best motion transmission and operation of the driven shaft.

The braking device proposed by the present invention is advantageously obtained by an extremely functional and reliable in each working step technical solution, whose production cost is very low.

It is understood that what above, has been described as a pure, not limitative example, therefore, possible variants of the invention remain within the protective scope of the present technical solution, as described above and claimed hereinafter.

## Claims

1. Motion transmission means for a tractor with one or more axles,
comprising:
a driving shaft (A1), operatable by motor means of said tractor,
at least one driven shaft (A2) operating working means connected therewith,
meshing means (R1,R2) aimed at coupling a first end of said driving shaft (A1) with a first end of said driven shaft (A2) and at transmitting motion between the shafts,
an automatically operated braking device (F),
and being **characterized in that** said braking device (F) includes mechanical working means (10), coupled with and sliding axially along said driving shaft (A1) in the region corresponding to said first end and provided, on one side, with first means (11) for mutual coupling with said meshing means (R1,R2), and, on the other side, with second means (12) for abutment against braking means (13), said second means (12) being connected with said driving shaft (A1) near said mechanical working means (10) and on the side opposite with respect to said meshing means (R1,R2), said mechanical working means (10) being aimed, when said driving shaft (A1) is rotated (ω1) by said motor means, at defining mutual coupling and connection between said driving shaft (A1) and said meshing means (R1,R2) obtained by said first means (11), in order to operate said driven shaft (A2), and the working means connected therewith, into a rotation (ω2), and simultaneously, at ensuring disengagement of said abutment means (12) from said braking means (13), and said mechanical working means (10) being also aimed, when said motor means are disconnected or deactivated, at defining a partial and temporary disengagement of said first means (11) from said meshing means (R1,R2) due to slowing down of said driving shaft (A1) with respect to said meshing means (R1,R2) and at translating axially (N) toward said braking means (13), so as to define a friction engagement between the latter and said second means (12), so as to brake and stop the driving shaft (A1) and, consequently, said meshing means (R1,R2) and then said driven shaft (A2).

2. Motion transmission means, according to claim 1, **characterized in that** said mechanical working means (10) include a sleeve (100) which is coupled to and slides axially along said driving shaft (A1) and is situated between said meshing means (R1,R2) and said braking means (13), said sleeve being provided, at the end facing said meshing means (R1,R2), with said mutual coupling means (11), and at the end facing said braking means (13), with said second means (12).

3. Motion transmission means, according to claim 2, **characterized in that** said first means (11) include recesses (110), which are arranged circumferentially on the end of the sleeve (100) facing said meshing means (R1,R2) and suitably shaped in axial direction, which recesses being aimed at mating corresponding protrusions (120), shaped complementarily to said recesses (110) and arranged circumferentially and protruding axially from a surface of said meshing means (R1,R2) facing said sleeve (100).

4. Motion transmission means, according to claim 1 or 3, **characterized in that**, when said driving shaft (A1) is operated to rotate (ω1), said recesses (110) are in complete engagement with said protrusions (120), so as to define a mutual coupling and connection between said driving shaft (A1) and said meshing means (R1,R2) in direction of rotation (ω1), due to the relative complementary shape.

5. Motion transmission means, according to claim 1 or 3, **characterized in that**, when said motor means are disconnected or deactivated and therefore said driving shaft (A1) slows down with decreasing angular speed (ω1') lower than the angular speed (ω2') of said meshing means (R1,R2), said recesses (110), due to a reciprocal angular shifting with respect to the corresponding protrusions (120) determined by different rotation speeds, respectively (ω1') for the recesses (110) and (ω2') for the protrusions (120), disengage partially from the latter and move in axial direction so as to determine axial sliding (N) of said sleeve (100) with respect to said driving shaft (A1) toward said braking means (13), so as to cause friction engagement between the latter and said second means (12).

6. Motion transmission means, according to claim 2, **characterized in that** said second means (12) include a flange (130), made integral with said sleeve (100).

7. Motion transmission means, according to claim 1, **characterized in that** the braking device (F) includes return elastic means (18), connected to said mechanical working means (10), and aimed, due to said axial translation (N) of said mechanical working means (10), at being loaded in order to allow, when said driving shaft (A1), said meshing means (R1,R2) and said driven shaft (A2) come to a stop, the repositioning of said mechanical working means (10) to the configuration of mutual coupling with said meshing means (R1,R2) and the disengagement from said braking means (13).

8. Motion transmission means, according to claim 1, **characterized in that** said braking means (13) include a stationary plate (14), centered with respect to said driving shaft (A1) by a brass (16) and featuring a seat (21) made in its surface turned toward said mechanical working means (10), for receiving an asbestos material lining (22).

9. Motion transmission means, according to claim 1, **characterized in that** said meshing means (R1,R2) include a first toothed wheel (R1), mounted on said driving shaft (A1) and a second toothed wheel (R2), mounted on said driven shaft (A2), said toothed wheels (R1,R2) meshing with each other.

10. Motion transmission means, according to any of the previous claims, **characterized in that** said driving shaft (A1) and said driven shaft (A2) are oriented so as to be incident.

11. Motion transmission means, according to any of the previous claims, **characterized in that** said driving shaft (A1) and said driven shaft (A2) are oriented so as to be inclined to each other.

## Patentansprüche

1. Vorrichtung zur Bewegungsübertragung für einen Traktor mit einer oder mehreren Achsen,
die folgendes enthält:
eine Antriebswelle (A1), die durch Motorelemente des besagten Traktors antreibbar ist,
wenigstens eine Antriebswelle (A2), die mit dieser verbundene Arbeitsmittel antreibt,
Verbindungselemente (R1, R2) zum Verbinden eines ersten Endes der besagten Antriebswelle (A1) mit einem ersten Ende der besagten Antriebswelle (A2) und zum Übertragen von Bewegungen zwischen den Wellen,
eine automatisch betätigbare Bremsvorrichtung (F),
und die **dadurch gekennzeichnet ist, daß** diese besagte Bremsvorrichtung (F) mechanische Arbeitsmittel.(10) umfaßt, die verbunden sind mit und axial
verschieblich entlang der besagten Antriebswelle (A1) in dem Bereich gehaltert sind, der dem besagten ersten Ende entspricht, und die auf einer Seite mit ersten Mitteln (11) für eine gegenseitige Kopplung mit den besagten Verbindungselementen (R1, R2) versehen sind und auf der anderen Seite mit zweiten Mitteln (12) für eine Anlage an den Bremsmitteln (13), wobei die besagten zweiten Mittel (12) in der Nähe der besagten mechanischen Arbeitsmittel (10) mit der besagten Antriebswelle (A1) verbunden sind und auf der Seite gegenüberliegend in Bezug auf die besagten Verbindungselemente (R1, R2), wobei die besagten mechanischen Arbeitsmittel (10) derart ausgebildet sind, daß, wenn die besagte Antriebswelle (A1) von den besagten Motorelementen gedreht wird (ω1), eine gegenseitige Kopplung und Verbindung zwischen der besagten Antriebswelle (A1) und den besagten Verbindungselementen (R1, R2) durch die besagten ersten Mittel hergestellt wird, um die besagte Antriebswelle (A2) anzutreiben und die damit verbundenen Arbeitsmittel in eine Rotation (ω2) zu versetzen, und gleichzeitig derart, daß eine Trennung der besagten Anschlagsmittel (12) von den besagten Bremsmitteln (13) gewährleiste ist, und wobei die besagten mechanischen Arbeitsmittel (10) auch derart ausgebildet sind, daß, wenn die besagten Motorelemente getrennt oder deaktiviert sind, eine teilweise und temporären Trennung der besagten ersten Mittel (11) von den besagten Verbindungselementen (R1, R2) gemäß der Verlangsamung der besagten Antriebswelle (A1) in Bezug auf die besagten Verbindungselemente (R1, R2) bewirkt wird und daß eine axiale Verschiebung (N) in Richtung auf die besagten Bremsmittel (13) bewirkt wird, derart, daß eine reibschlüssige Verbindung zwischen den letzteren und den besagten zweiten Mitteln (12) erzeugt wird, so daß die Antriebswelle (A1) und die besagten Verbindungselemente (R1, R2) und dann die besagte Antriebswelle (A2) abgebremst und angehalten werden.

2. Vorrichtung zur Bewegungsübertragung gemäß Anspruch 1, **dadurch gekennzeichnet, daß** die besagten mechanischen Arbeitsmittel (10) eine Hülse (100) umfassen, die verbunden ist mit und axial verschieblich entlang der besagten Antriebswelle (A1) gehaltert ist und die zwischen den besagten Verbindungselementen (R1, R2) und den besagten Bremsmitteln (13) angeordnet ist, wobei die besagte Hülse an dem Ende, das den besagten Verbindungselementen (R1, R2) gegenüberliegt, mit den besagten gegenseitigen Kopplungsmitteln (11) versehen ist und an dem Ende, das den besagten Bremsmitteln (13) gegenüberliegt, mit den besagten zweiten Mitteln (12) versehen ist.

3. Vorrichtung zur Bewegungsübertragung gemäß Anspruch 2, **dadurch gekennzeichnet, daß** die besagten ersten Mittel (11) Aussparungen (110) aufweisen, die umfangsmäßig an dem Ende der Hülse (100) angeordnet sind, das den besagten Verbindungselementen (R1, R2) gegenüberliegt und die in axialer Richtung geeignet ausgebildet sind, wobei die Aussparungen derart ausgebildet sind, daß sie mit entsprechenden Vorsprüngen (120) zusammenpassen, die komplementär zu den besagten Aussparungen (110) ausgebildet sind und die umfangsmäßig aus einer Oberfläche der besagten Verbindungselemente (R1, R2) axial hervorstehen, die der besagte Hülse (100) gegenüberliegt.

4. Vorrichtung zur Bewegungsübertragung gemäß Anspruch 1 oder 3, **dadurch gekennzeichnet, daß**, wenn die besagte Antriebswelle (A1) angetrieben wird, um sich zu drehen (ω1), sich die besagten Aussparungen (110) vollständig in Eingriff mit den besagten Vorsprüngen (120) befinden, um eine gegenseitige Kopplung und eine formschlüssige Verbindung zwischen der besagten Antriebswelle (A1) und den besagten Verbindungselementen (R1, R2) in Richtung der Drehbewegung (ω1) zu erzeugen.

5. Vorrichtung zur Bewegungsübertragung gemäß Anspruch 1 oder 3, **dadurch gekennzeichnet, daß**, wenn die besagten Bewegungsmittel getrennt oder deaktiviert sind und folglich die besagte Antriebswelle (A1) mit abnehmender Winkelgeschwindigkeit (ω1'), die geringer ist als die Winkelgeschwindigkeit (ω2') der besagten Verbindungselemente (R1, R2), langsamer wird, die besagten Aussparungen (110), aufgrund einer relativen angularen Verschiebung in Bezug auf die entsprechenden Vorsprünge (120), bewirkt durch unterschiedliche Umdrehungsgeschwindigkeiten (ω1') für die Aussparungen (110) und (ω2') für die Vorsprünge (120), teilweise außer Eingriff mit den letzteren gelangen und sich in axialer Richtung derart bewegen, daß sie ein axiales Gleiten (N) der besagten Hülse (100) in Bezug auf die besagte Antriebswelle (A1) in Richtung auf die besagten Bremsmittel (13) derart hervorrufen, daß eine Reibverbindung zwischen den letzteren und den besagten zweiten Mitteln (12) hergestellt wird.

6. Vorrichtung zur Bewegungsübertragung gemäß Anspruch 2, **dadurch gekennzeichnet, daß** die besagten zweiten Mittel (12) einen Flansch (130) mit einschließen, der integral mit der besagten Hülse (100) ausgebildet ist.

7. Vorrichtung zur Bewegungsübertragung gemäß Anspruch 1, **dadurch gekennzeichnet, daß** die Bremsvorrichtung (F) elastische Rückholmittel (18) umfaßt, die mit den besagten mechanischen Arbeitsmitteln (10) verbunden sind und die derart ausgebildet sind, daß sie aufgrund der besagten axialen Verschiebung (N) der besagten mechanischen Arbeitsmittel (10), gespannt werden, um, wenn die besagte Antriebswelle (A1), die besagten Verbindungselemente (R1, R2) und die besagte Antriebswelle (A2) zum Stillstand kommen, ein Zurücksetzen der besagten mechanischen Arbeitsmittel (10) in die Konfiguration der gegenseitigen Kopplung mit den besagten Verbindungselementen (R1, R2) und die Trennung von den besagten Bremsmitteln (13) zu ermöglichen.

8. Vorrichtung zur Bewegungsübertragung gemäß Anspruch 1, **dadurch gekennzeichnet, daß** die besagten Bremsmittel (13) eine stationäre Platte (14) mit einschließen, die in Bezug auf die besagte Antriebswelle (A1) durch eie Buchse (16) zentriert ist und die einen Sitz (21) zur Aufnahme eines Belages (22) aus Asbestmaterial aufweist, der in ihre Oberfläche eingearbeitet ist, die in Richtung auf die besagten mechanischen Arbeitsmittel (10) orientiert ist.

9. Vorrichtung zur Bewegungsübertragung gemäß Anspruch 1, **dadurch gekennzeichnet, daß** die besagten Verbindungselemente (R1, R2) ein erstes Zahnrad (R1) aufweisen, das an der besagten Antriebswelle (A1) angeordnet ist, und ein zweites Zahnrad (R2), das an der besagten Antriebswelle (A2) angeordnet ist, wobei die besagten Zahnräder (R1, R2) miteinander in Eingriff bringbar sind.

10. Vorrichtung zur Bewegungsübertragung gemäß einem der vorhergehenden Ansprüche, **dadurch gekennzeichnet, daß** die besagte Antriebswelle (A1) und die besagte Antriebswelle (A2) derart orientiert sind, daß sie einfallenden zueinander sind.

11. Vorrichtung zur Bewegungsübertragung gemäß einem der vorhergehenden Ansprüche, **dadurch gekennzeichnet, daß** die besagte Antriebswelle (A1) und die besagte Antriebswelle (A2) derart orientiert sind, daß sie unter einem Winkel zueinander angeordnet sind.

## Revendications

1. Moyens de transmission de mouvement pour un tracteur avec un ou plusieurs essieux,
comprenant:
un arbre d'entraînement (A1), actionnable par des moyens moteurs dudit tracteur,
au moins un arbre entraîné (A2) actionnant des moyens de fonctionnement reliés à celui-ci,
des moyens d'engrènement (R1, R2) destinés à coupler une première extrémité dudit arbre d'entraînement (A1) et une première extrémité dudit arbre entraîné (A2) et à transmettre le mouvement entre les arbres,
un dispositif de freinage à fonctionnement automatique (F),
et étant **caractérisés en ce que** ledit dispositif de freinage (F) comprend des moyens de fonctionnement mécanique (10) accouplés audit arbre d'entraînement (A1), et coulissant de façon axiale le long de celui-ci, dans la région correspondant à ladite première extrémité et pourvus, sur un côté, de premiers moyens (11) pour un couplage mutuel avec lesdits moyens d'engrènement (R1, R2), et, sur l'autre côté, de seconds moyens (12) pour prendre appui contre des moyens de freinage (13), lesdits seconds moyens (12) étant reliés audit arbre d'entraînement (A1) près desdits moyens de fonctionnement mécanique (10) et sur le côté opposé par rapport auxdits moyens d'engrènement (R1, R2), lesdits moyens de fonctionnement mécanique (10) étant destinés, lorsque ledit arbre d'entraînement (A1) est entraîné en rotation (ω1) par lesdits moyens moteurs, à définir un couplage et une liaison mutuels entre ledit arbre d'entraînement (A1) et lesdits moyens d'engrènement (R1, R2) cbtenus par lesdits premiers moyens (11), afin d'actionner ledit arbre entraîné (A2), et les moyens de fonctionnement reliés à celui-ci, pour obtenir une rotation (ω2), et simultanément, à assurer le découplage desdits moyens de butée (12) desdits moyens de freinage (13), et lesdits moyens de fonctionnement mécanique (10) étant également destinés, lorsque lesdits moyens moteurs sont découplés ou désactivés, à définir un découplage partiel et temporaire desdits premiers moyens (11) desdits moyens d'engrènement (R1, R2) en raison du ralentissement dudit arbre d'entraînement (A1) par rapport auxdits moyens d'engrènement (R1, R2) et à se déplacer de façon axiale (N) vers lesdits moyens de freinage (13), afin de définir une prise de frottement entre ces derniers et lesdits seconds moyens (12), afin de freiner et stopper l'arbre d'entraînement (A1) et, par conséquent, lesdits moyens d'engrènement (R1, R2) et ensuite ledit arbre entraîné (A2).

2. Moyens de transmission de mouvement, selon la revendication 1, **caractérisés en ce que** lesdits moyens de fonctionnement mécanique (10) comprennent un manchon (100) qui est accouplé audit arbre d'entraînement (A1), et coulisse de façon axiale le long de celui-ci, et est situé entre lesdits moyens d'engrènement (R1, R2) et lesdits moyens de freinage (13), ledit manchon étant pourvu, au niveau de l'extrémité faisant face auxdits moyens d'engrènement (R1, R2), desdits moyens de couplage mutuel (11), et au niveau de l'extrémité faisant face auxdits moyens de freinage (13), desdits seconds moyens (12).

3. Moyens de transmission de mouvement, selon la revendication 2, **caractérisés en ce que** lesdits premiers moyens (11) comprennent des évidements (110), qui sont agencés de façon circonférentielle sur l'extrémité du manchon (100) faisant face auxdits moyens d'engrènement (R1, R2) et façonnés de façon appropriée dans une direction axiale, lesquels évidements étant destinés à s'accoupler avec des protubérances correspondantes (120), façonnées de façon complémentaire auxdits évidements (110) et agencées de façon circonférentielle et faisant saillie de façon axiale à partir d'une surface desdits moyens d'engrènement (R1, R2) faisant face audit manchon (100).

4. Moyens de transmission de mouvement, selon la revendication 1 ou 3, **caractérisés en ce que**, lorsque ledit arbre d'entraînement (A1) est actionné pour tourner (ω1), lesdits évidements (110) sont en prise complète avec lesdites protubérances (120), afin de définir un couplage et une liaison mutuels entre ledit arbre d'entraînement (A1) et lesdits moyens d'engrènement (R1, R2) dans la direction de rotation (ω1), en raison de la forme complémentaire relative.

5. Moyens de transmission de mouvement, selon la revendication 1 ou 3, **caractérisés en ce que**, lorsque lesdits moyens moteurs sont découplés ou désactivés et donc ledit arbre d'entraînement (A1) ralentit avec une vitesse angulaire décroissante (ω1') inférieure à la vitesse angulaire (ω2') desdits moyens d'engrènement (R1, R2), lesdits évidements (110), en raison d'un décalage angulaire réciproque par rapport aux protubérances correspondantes (120) déterminé par des vitesses de rotation différentes, respectivement (ω1') pour les évidements (110) et (ω2') pour les protubérances (120), se découplent partiellement à partir de ces dernières et se déplacent dans la direction axiale afin de déterminer le coulissement axial (N) dudit manchon (100) par rapport audit arbre d'entraînement (A1) vers lesdits moyens de freinage (13), afin d'entraîner une prise de frottement entre ces derniers et lesdits seconds moyens (12).

6. Moyens de transmission de mouvement, selon la revendication 2, **caractérisés en ce que** lesdits seconds moyens (12) comprennent une bridé (130), réalisée de façon solidaire avec ledit manchon (100).

7. Moyens de transmission de mouvement, selon la revendication 1, **caractérisés en ce que** le dispositif de freinage (F) comprend des moyens élastiques de retour (18), reliés auxdits moyens de fonctionnement mécanique (10), et destinés, en raison dudit déplacement axial (N) desdits moyens de fonctionnement mécanique (10), à être chargés afin de permettre, lorsque ledit arbre d'entraînement (A1), lesdits moyens d'engrènement (R1, R2) et ledit arbre entraîné (A2) s'arrêtent, le repositionnement desdits moyens de fonctionnement mécanique (10) jusqu'à la configuration de couplage mutuel avec lesdits moyens d'engrènement (R1, R2) et le découplage à partir desdits moyens de freinage (13).

8. Moyens de transmission de mouvement, selon la revendication 1, **caractérisés en ce que** lesdits moyens de freinage (13) comprennent une plaque stationnaire (14), centrée par rapport audit arbre d'entraînement (A1) par un coussinet (16) et comprenant un siège (21) réalisé dans sa surface tournée vers lesdits moyens de fonctionnement mécanique (10), pour recevoir un revêtement de matériau d'amiante (22).

9. Moyens de transmission de mouvement, selon la revendication 1, **caractérisés en ce que** lesdits moyens d'engrènement (R1, R2) comprennent une première roue dentée (R1), montée sur ledit arbre d'entraînement (A1) et une seconde roue dentée (R2), montée sur ledit arbre entraîné (A2), lesdwtes roues dentées (R1, R2) s'engrenant l'une avec l'autre.

10. Moyens de transmission de mouvement, selon l'une quelconque des revendications précédentes, **caractérisés en ce que** ledit arbre d'entraînement (A1) et ledit arbre entraîné (A2) sont orientés afin d'être incidents.

11. Moyens de transmission de mouvement, selon l'une quelconque des revendications précédentes, **caractérisés en ce que** ledit arbre d'entraînement (A1) et ledit arbre entraîné (A2) sont orientés afin d'être inclinés l'un par rapport à l'autre.
